# EUROPEAN PATENT SPECIFICATION

(11) **EP 1 114 108 B1**
(45) Date of publication and mention of the grant of the patent: **23.04.2003**
(21) Application number: 99939548.6
(22) Date of filing: 13.08.1999
(51) Int. Cl.: C09J 5/02, C09J 7/02, F16C 3/02, C09J 7/04

(54) **METHOD OF BONDING A CHROME STEEL TO A FIBRE COMPOSITE**
VERFAHREN ZUM VERBINDEN VON CHROMSTAHL UND EINEM FASERVERBUNDWERKSTOFF
PROCEDE DE COLLAGE D'UN ACIER TREMPE AVEC UN COMPOSITE DE FIBRES

(30) Priority: 13.08.1998 GB 9817671
(43) Date of publication of application: 11.07.2001
(73) Proprietor: Flight Refuelling Limited, Wimborne, Dorset BH21 2BJ (GB)
(72) Inventor: TAVAKOLI, Mehdi, Sawston, CambridgeCB2 4UW (GB); BUSH, Andrew, Balsham, Cambridge CB1 6EF (GB); ISAAC, Martyn Cyril Stanley, South Molton, Devon EX36 4JT (GB); SIMMONS, Ian Anthony, Uffculme, Devon EX15 3EE (GB)
(74) Representative: Crump, Julian Richard John
(86) International application number: GB9902679
(87) International publication number: WO00009621

(56) References cited:
- EP-A- 0 474 441
- US-A- 4 916 018
- DATABASE WPI Section Ch, Week 8951 Derwent Publications Ltd., London, GB; Class A21, AN 89-373557 XP002098245 & JP 01 278592 A (UBE IND LTD), 8 November 1989 (1989-11-08)

## Description

The present invention relates to a method of bonding, and has particular reference to a method of bonding high chrome steel to a fibre reinforced composite material. The invention also comprehends a bonded joint formed using the method of the present invention, and a bonded assembly comprising a high chrome steel component and a fibre composite component that are bonded together using the bonding method of the present invention.

In a particular aspect, the present invention provides a rotary drive shaft comprising a carbon fibre composite tube and a high chrome steel flange that are bonded together using a bonding method of the present invention.

Composite rotary drive shafts are widely used throughout the aerospace industry, and are employed, for instance, in the wings of aircraft. WO-A-98/20263, the contents of which are included herein by reference, discloses such a rotary drive shaft and a method for manufacturing it. The shaft of WO-A-98/20263 comprises a carbon fibre composite tube that is fitted at one end with a titanium flange. Said titanium flange is bonded to the composite tube, and the joint is also riveted for reinforcement. Said titanium flange constitutes an expensive component, and at the time of writing there is a general desire within the aerospace industry to reduce the unit cost of components for aircraft.

Those skilled in the art will know that aerospace components are subjected to extreme ambient conditions in use. In particular a special problem in the aircraft industry is the high temperature and high relative humidity of the operating conditions. In order to be qualified for use on aircraft, components are therefore subjected to rigorous testing under extreme conditions of temperature and relative humidity.

There is a general requirement to bond components together, rather than to use mechanical fixings such as rivets or bolts, because the latter tend to work loose and/or fail through repeated stress-relax cycles. However, it will be appreciated that adhesive bonding may become vulnerable to attack by moisture. Furthermore, some adhesively bonded joints may fail through differences in the coefficients of thermal expansion of the adherends. Accordingly, there is an ongoing need to find new methods and materials for bonding components for use in the aerospace industry which are subject to high temperature and high relative humidity conditions.

The use of carbon fibre component materials is preferred within the aerospace industry because of the lightness of such components and their high strength and rigidity. However, the bonding of composite components to other components represents an area of particular difficulty, because moisture is able penetrate a joint not only along the bond line, but also through the composite itself.

According to one aspect of the present invention there is provided a method of bonding a first high chrome steel adherend to a second fibre composite adherend, which method comprises the steps of applying an epoxy primer to said first adherend, causing or allowing said primer to dry and thereafter adhering the first and second adherends together using an epoxy adhesive.

In another aspect of the present invention there is provided a bonded joint comprising a first high chrome steel adherend and a second fibre composite adherend, which first and second adherends are bonded together using the method of bonding of the present invention.

In yet another aspect of the present invention there is provided a bonded assembly comprising a first high chrome steel component and a second fibre composite component, which first and second components are bonded together using the method of bonding of the present invention.

In a preferred aspect of the present invention, said bonded assembly comprises a rotary drive shaft comprising a fibre composite tube and a high chrome steel flange, which tube and flange are bonded together using the bonding method of the present invention.

Preferably said tube is formed with at least one, and preferably two, flared ends, each of which is deformed to form an integrant flange portion having an annular bonding face as described in WO-A-98/20263. Said bonding face is bonded to said steel flange using the bonding method of the present invention.

Said high chrome steel flange represents a significantly cheaper component than the titanium flange of the prior art. Optionally, the joint between the tube and flange may be reinforced by rivets, bolts or any other suitable mechanical fixings.

Surprisingly, it has been found that the bonding method of the present invention allows a high chrome steel adherend to be bonded to a fibre composite adherend to provide a joint which has a high torque-to-failure, even after exposure to extreme ambient conditions of high temperature and high relative humidity.

Said high chrome steel adherend may comprise a aerospace grade steel. Specifically, the steel may comprise 12% to 20% by weight chromium, preferably 15% to 19% wt. Said steel may further comprise 0% to 8% wt nickel, preferably 2% to 6% wt. Typical additions of chromium and nickel are 17% wt and 4% wt respectively. Thus, said first high chrome steel adherend may comprise a 17/4 grade steel.

Said second fibre composite adherend may comprise an aerospace-grade fibre-reinforced composite material comprising an epoxy resin. Preferably, said composite will comprise a carbon fibre reinforced composite material, although it is envisaged that the composite may be reinforced with any suitable fibres known in the art. A specific carbon fibre composite material suitable for use as the second fibre composite adherend is the material 6376cHTA(12K-5-35) which is commercially available from Hexcel Corporation.

Said first adherend is preferably pre-treated by abrading or etching before the primer is applied. Such pre-treatment may serve to remove contaminants or weak boundary layers and/or alter the surface chemistry or surface morphology of the metal or any metal oxide surface layer(s).

Said first high chrome steel adherend may be degreased to remove contaminants before abrading or etching is carried out. A suitable abrasion agent is particulate aluminium oxide, for example 60 mesh alumina in a water vehicle, which may be wet-blasted onto the first adherend. Preferably, the water used for such wet-blasting is free of anti-corrosion agents.

In some instances, etching may be preferable to abrading, and a suitable etching solution comprises iron (III) chloride and hydrochloric acid. Such an etching solution will be familiar to those skilled in the art. Alternative etching methods comprise an oxalic acid/sulfuric acid etch, or etching using hydrochloric acid.

Said second adherend may be degreased before application of the adhesive. In some embodiments the second adherend will be protected by a strippatte film of the kind well known to those skilled in the art.

Said second adherend may also be pre-treated if and where necessary by abrading, particularly light abrading, to remove contaminants and/or loose or weakly bound material. Light abrasion may be effected using, for example, a suitable grit paper, followed by degreasing. A suitable grit paper is 120 mesh carborundum grit paper.

Said epoxy primer will advantageously have a rheology and chemical composition that is selected to match the morphology and surface chemistry of the first adherend, to provide optimum protection of the pre-treated surface, and to be compatible with the adhesive. Said primer may be solvent based, but is preferably water based, and may have a solids content of 5-15% wt, typically about 10% wt. Said primer may comprise a simple surface protection solution. Advantageously however, the primer comprises a hardening agent. In some embodiments of the invention, the primer comprises an anti-corrosion agent. Said anti-corrosion agent may be any suitable such agent known to those skilled in the art such, for example, as a zinc salt anti-corrosion agent. Preferably however the anti-corrosion agent comprises a chromate salt such, for example, as strontium chromate.

In one embodiment, the primer comprises a dispersion of an epoxy resin or mixture of epoxy resins in water. Said dispersion may further incorporate an epoxy curing agent. In particular, said curing agent may be provided as a distinct phase. Said epoxy resin or mixture of epoxy resins may comprise one or more chain-extended, solid glycidyl ethers of phenols, such as resorcinol and the bisphenols, such as bisphenol A, bisphenol F, and others familiar to the man skilled in the art. Alternatively, said epoxy resin or mixture of epoxy resins may comprise one or more of the solid glycidyl derivatives of aromatic amines and aminophenols, such as N,N,N'N'-solid DGEBA resins.

Preferably, said curing agent is substantially water insoluble, and is solid at room temperature. Said curing agent may comprise an aromatic amine curing agent such as 4,4'-diaminodiphenylmethane; 3,3'- or 4,4'-diaminodiphenyloxide; 3,3'- or 4,4'-diaminodiphenylsulfide; or 3,3'- or 4,4'-diaminodiphenylketone. In particular, said curing agent may comprise 4,4'-[1,4-phenylene(1-methylethylidene)]-bis(benzeneamine). However, various other solid diamine curing agents of the type well known to the man skilled in the art may also be used.

Said primer may further comprise a toughening agent, such as, for example, an elastomer. Advantageously, said primer may further comprise an anti-corrosion additive or mixture of anti-corrosion additives. Said anti-corrosion additive may comprise a chromate salt, for example strontium chromate, barium chromate, zinc chromate or lead chromate. Alternatively, said anti-corrosion additive may comprise a non-chromate corrosion inhibitor, such as zinc phosphate, zinc molybdate or SICORIN RZ available from BASF AG, Ludwigshafen, Germany. In some embodiments the primer may be free of any anti-corrosion additives.

The preparation of a suitable primer is described in US 5461090, the contents of which are incorporated herein by reference.

Specifically, said primer may be BR®6747-1-A which is commercially available from Cytec Industries, Inc. The CAS Registry number for this substance is 192390-61-7. BR®6747-1-A is a 100% water based corrosion inhibiting primer comprising a one part modified epoxy chromate primer which contains substantially no volatile organic compounds. A chromate-free equivalent of BR®6747-1-A may alternatively be used.

Said primer may be air-dried or dried in an oven. In some embodiments the primer may be pre-cured, usually in an oven, before application of the adhesive.

Pre-curing of the primer may be advantageous because it may serve to localise functional ingredients of the primer (such as the anti-corrosion agent) juxtaposed the first adherend.

Said epoxy adhesive may be a film adhesive, a paste adhesive or any other suitable form of adhesive. Where a film adhesive is used, it may comprise a suitable reticulated carrier (US: "support") or it may be unsupported.

Said carrier is preferably formed from a polymeric plastics material such as nylon or polyester, with polyester being especially preferred. Said carrier may comprise a woven, knitted or needled fabric. Preferably, said fabric is formed from monofilamentis fibres, so as to avoid wicking of water into the bond.

Preferably the adhesive is a modified epoxy adhesive. A suitable adhesive is that which is available commercially from Cytec Engineering Materials Inc under the trade name FM300K, particularly FM300K.05 (250g/m²). FM 300K is an epoxy resin adhesive film which may include 0-0.5% titanium dioxide. The CAS Registry number for FM 300K is 71210-48-5.

Said adhesive may be applied to the first adherend or the second adherend, or both. The adhesive is then cured in an oven or autoclave.

The second composite adherend may be used in a pre-cured or uncured state. Advantageously, the second adherend is used uncured, and after application of the primer to the first adherend (and optionally the second adherend) and application of the adhesive, the composite material is co-cured with the primer and adhesive.

The present invention thus provides a method of bonding a high chrome steel component to a carbon fibre composite component which has sufficient torque-to-failure under conditions of high moisture and high temperature to make it suitable for use in the aerospace industry.

Following is a description by way of example only with reference to the accompanying drawings of embodiments of the present invention.

In the drawings:-
Figure 1 is a side view, partly in cross-section, of one end of a rotary power transmission shaft in accordance with the present invention.
Figure 2 is an end view of the shaft of figure 1.

### Examples

### Adherends

Stainless steel (AMS 5643 (H1025), 17/4, 54mm dia) and fibre reinforced epoxy composite (Fibredux 6376, 75 x 753mm) components were used. The epoxy composite was supplied with a protective strip ply that was removed before use.

### Adhesive

Cytec FM300K - this is a modified epoxy film adhesive with a polyester carrier and supplied by Cytec Engineering Materials Inc. CAS Registry no. 71210-48-5. The grade used was FM300K.05 (250g/m²).

### Primer

BR®6747-1-A 100% water based corrosion inhibiting primer. This is a 100% water based corrosion inhibiting primer comprising a one part modified epoxy chromate primer which contains substantially no volatile organic compounds. CAS Registry no. 192390-61-7. This primer was sprayed on stainless steel adherends after pre-treatment.

### Surface Pre-Treatment

### (after Removing the Strip Ply)

The epoxy composite components were first degreased using Lotoxane® wipes then abraded with 120 alumina grit and degreased. A number of different pre-treatments (See Table 1 below) were used to prepare the surfaces of the stainless steel adherend before bonding. Details of each pre-treatment are as follows:-

### Ferric Chloride - Hydrochloric Acid Etch

The following etch solution was used to treat stainless steel components.
a) 50/50 (w/w) of Iron (III) chloride and 35-37% HCl
b) Temperature of solution was maintained at 20-23°C
c) Etched for 10 minutes
d) washed with deionised water
e) Dried at room temperature.

### Wet Blasting

Wet blasting was carried out using 60 mesh aluminium oxide at an air pressure of 401bf/in² for a duration of approximately 2-3 seconds.

### Primer

The primer was used as follows:
BR®6747-1-A thin coating (3-4□m) of this primer was applied using a spray gun. The coated specimen was first allowed to dry at room temperature and then the primer was cured at 120°C for 60 minutes. A gravity feed air pressure spray gun (M21G) supplied by Kremlin) was used to spray the Cytec primer. This gun works on the principle of conventional spraying which mixes the primer with air as it leaves the gun. The primer comes out of the nozzle under low pressure and is sprayed by a fan of compressed air coming from the aircap at around 3-6 bar. On pulling the trigger, firstly the air is liberated by the air valve, and then the product is emitted by the needle. The whole assembly of the aircap, the needle and the nozzle is called the projector. The primer was sprayed at a pressure of 4 bar. The specimens were coated by a single pass of spraying to give the required thickness as described earlier.

### Joint Preparation

The joints were prepared using the stainless steel and fibre reinforced epoxy composite components after various pre-treatments or primer/adhesive combinations. The preparation conditions and number of specimens required to assess the joint strength before and after ageing are shown in Tables 1 and 2 below. A jig was specifically designed and constructed for assembly and bonding of the components. The base of the jig consisted of a large mild steel washer (65mm diameter) with an M6 clearance hole. A length of 6mm studding was put through the hole and a M6 nut as well as a locking nut were placed on the underside of the washer. The composite part of the bonding component was positioned in place and this was followed by placement of the film adhesive and stainless steel component. A calibrated music wire spring with a rating of 20N/mm was placed over the studding and this was held compressed by a washer and a nut. This type of spring allowed pressure of 2 bar to be applied to the joint during cure. The whole assembly of each joint was then placed in an oven to cure.

### Joint Assessment

The strength of each set of joints was determined by measuring the torque-to-failure using a torque wrench as supplied by MHH Engineering. The torque wrench was equipped with 200-2000Nm range and 1 inch drive. A one to three quarter inch adapter was used to attach the torque wrench to the specimen which also had a 3/4 inch shaft. In order to hold the bonded components during testing a jig was constructed. The jig mainly consisted of a top and a bottom plate, with a steel joint location plate in between.

### Durability Testing

The durability of the bonded joint in a hot and humid environment was studied, at a temperature of 70°C and a relative humidity of 95%. Eighty-four epoxy composite/stainless steel bonded joints, as well as thirty epoxy composite components (75 x 75 x 3mm plates), were placed in the chamber. The epoxy composite test pieces were removed from the chamber and weighed three times during the first week, and then once a week for a period of 8 weeks.
The percentage moisture uptake for each individual composite specimen was measured and recorded. Different specimens were exposed to four and eight weeks ageing at 70°C and 85% RH as shown in Table 2 and then removed for testing. The specimens (see Table 3 below) were also exposed at 70°C and 100%RH after reaching 1.2% moisture (10 days exposure) uptake. The torque-to-failure of these joints was also determined as shown in Table 3.

### Assessment of Joints after Ageing

The results of four and eight weeks ageing of the joints at 70°C and 85% RH are shown in Table 2.

The samples prepared after grit blasting and aged for eight weeks resulted in mean failure torque similar to those aged for four weeks. However, the result of four weeks ageing is only based on two joints and therefore can not be statistically compared. Nevertheless, it should be mentioned that these results shown there is little or no loss in failure torque on additional four weeks ageing.

A similar trend in failure torque was observed with specimens treated with FeCl₃+HCl etch during four and eight weeks ageing. The mean failure torque was 1025Nm after eight weeks compared with 1150Nm after four weeks ageing.

Compared with control values (Table 1) both pre-treatments show reductions in failure torque; 20% for grit blast, 26% for etch pre-treatment.

The grit blast pre-treatment shows little change in failure mode, with mixed cohesive failure in the adhesive and composite ply failure, indicating exposure effects may be limited to the adhesive and not interfaces.

The etch pre-treated specimens show a reduction in composite failure after exposure, with an increase in cohesive failure within the adhesive layer. This may be the result of water ingress into the adhesive, either along the carrier/adhesive interface, or through the bulk of the adhesive or both. It is noteworthy that one specimen shows a high level of adhesion failure to the stainless steel interface.

The higher coefficient of variation value for surface exposed etch specimens (15%) compared with exposed grit blast specimens (12%) follows the trend in control specimens results (grit blast 10%, etch 19%).

The differences in mean strength after exposure are probably not significant (grit blast 1085Nm, etch 1025Nm).

### Ageing After 1.2% Moisture Uptake

The results of ageing of joints at 70°C and 100% RH to reach 1.2% moisture uptake after 10 days is shown in Table 3.

With only one sample for the two treatments (grit blast and etch) used with Cytec FM300k/6747-1 definitive conclusions cannot be drawn. However, from inspection of the results both failure torque and failure mode are similar to the results of both 4 and 8 weeks high humidity exposure. It should be noted however, that for the 1.2% moisture uptake equilibrium test, exposure conditions (70°C/100%RH) differed slightly from the 4 and 8 week exposure conditions (70°C/85%RH).

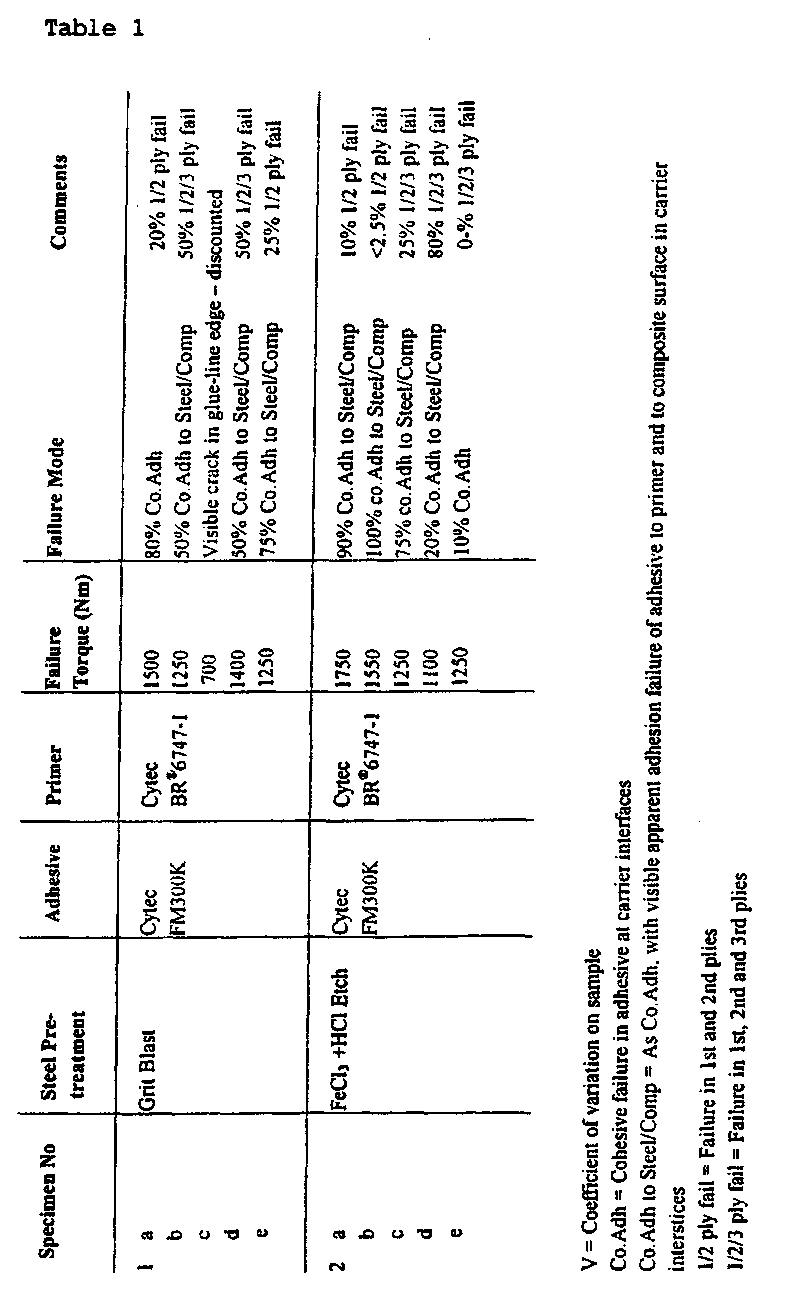

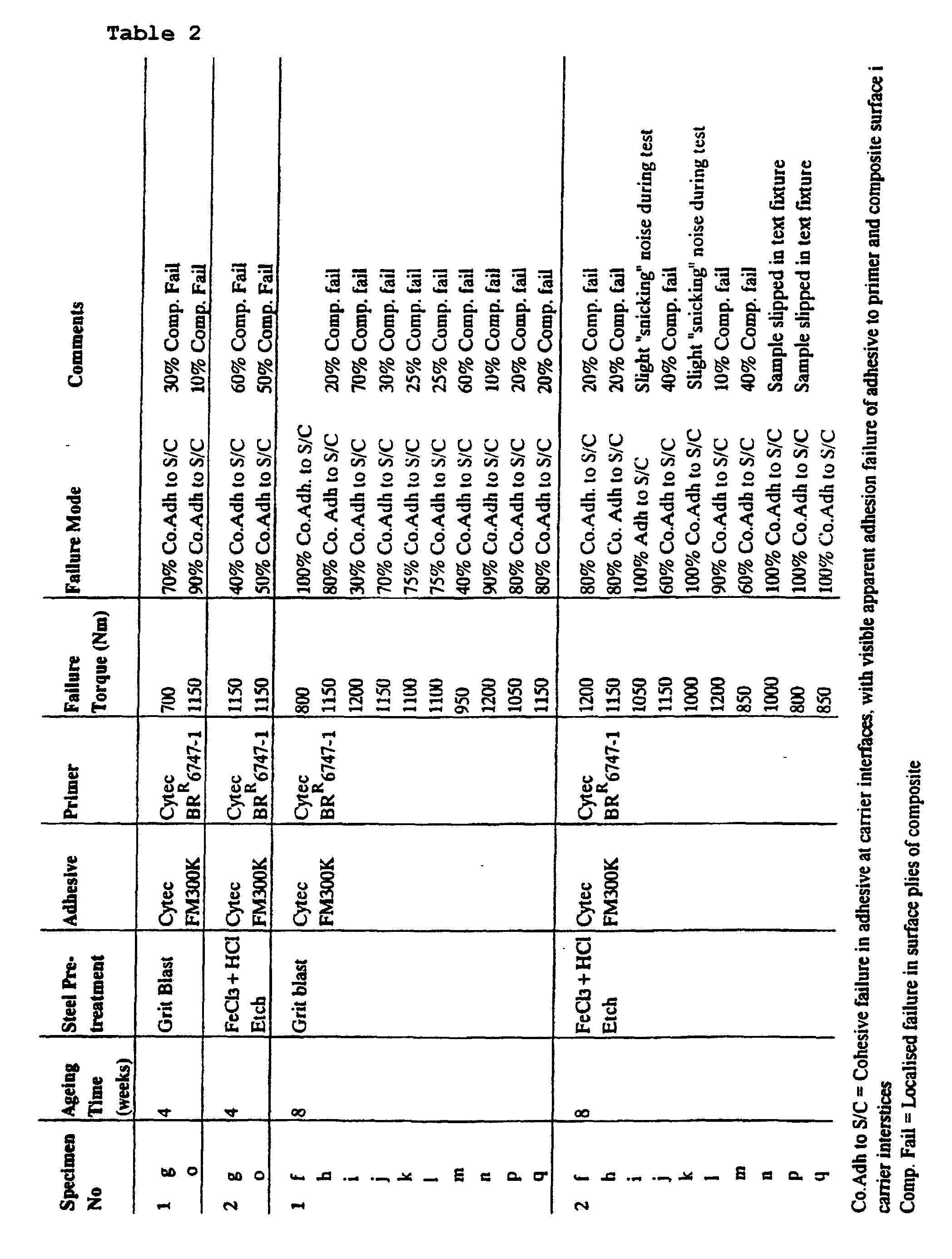

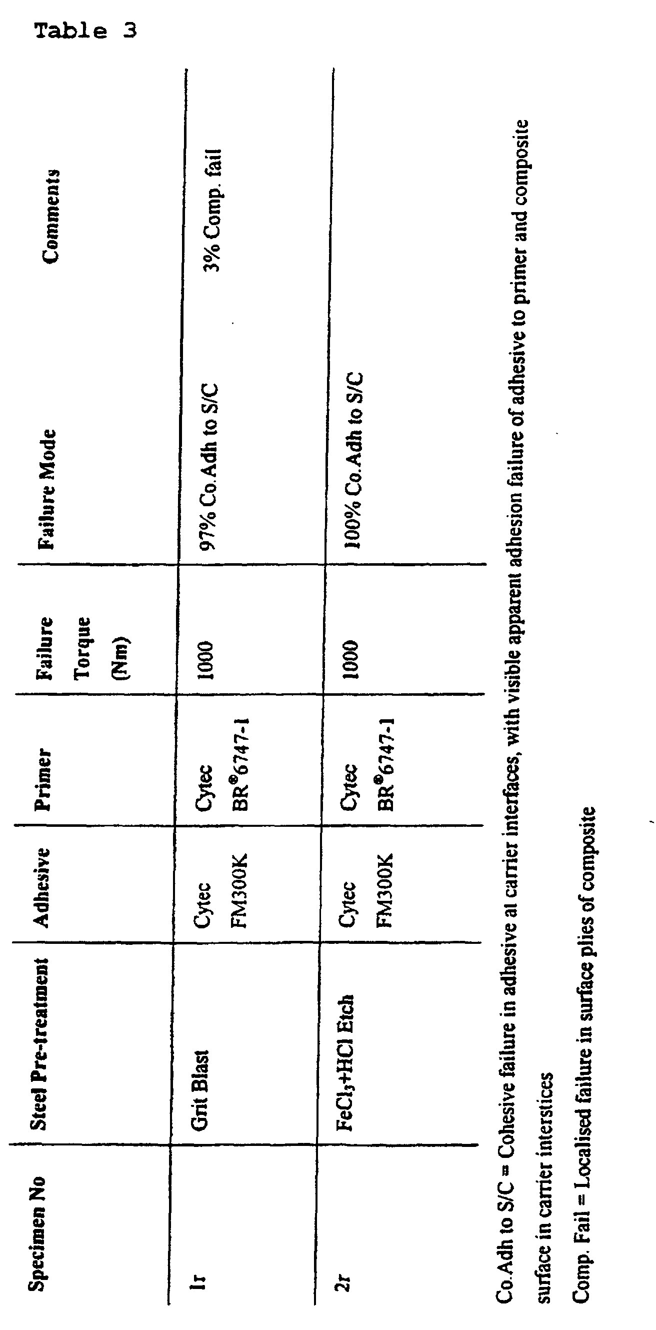

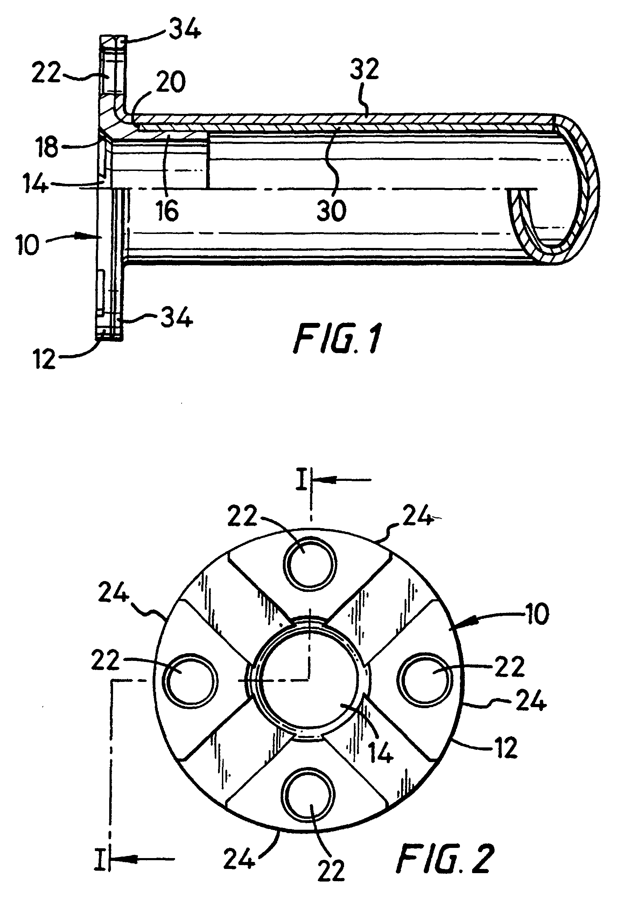

Figure 1 shows one end of a rotary power transmission shaft that is suitable for use in driving the flaps in aircraft wings. The other end of the shaft may, in some embodiments, be substantially the same as the end shown, or it may be different. Said one end of the shaft comprises an end plate (10) that is made as one piece from a high chrome steel such, for example, as AMS 5643 (H1025)17/4. Said end plate (10) comprises a generally annular portion (12) having a central aperture (14), and a tubular spigot portion (16) that is positioned concentrically with the aperture (14) and meets the annular portion (12) around the edge of the said aperture (14). As can be seen from figure 1, the end plate (10) is chamfered on its inner surface at (18) where the annular portion meets the spigot portion around the aperture (14). The opposing outer surface of the end plate is curved where the annular portion (12) and spigot portion (16) meet to provide a smooth transition therebetween. The outer surface of the spigot portion (16) is rebated at (20).

Said spigot portion (16) of the end plate (10) is spigotted in one end of a tubular mandrel (30) that is made of carbon fibre reinforced plastics material. The spigot portion (16) forms a snug fit within the end of the mandrel (30), and the two are mutually located by the rebate (20).

Said tubular mandrel (30) lines the inner surface of a tube (32) that has an integrant annular flange (34) at the said one end. Said flange (34) protrudes beyond the end of the mandrel (30) and lies contiguous the outer surface of the end plate (10) as shown in the figure. The flange (34) of the tube (32) is radially coterminous with the annular portion (12) of the end plate (10) and is fixedly secured thereto using an adhesive bond in accordance with the invention.

The rotary transmission shaft shown in figures 1 and 2 can be assembled substantially in the same way as described in WO-A-98/20263 by winding carbon fibre tape impregnated with thermosetting resin onto the mandrel (30) using a conventional tape winding machine fitted with suitable shaped centres for holding the mandrel. The outer surface of the end plate (10) that is to mate with the flange (34) of the tube (32) is pre-treated by abrasion in the manner described above, and a layer of an epoxy primer such as BR® 6747-1-A available from Cytec Engineering Materials Inc is applied. An epoxy film adhesive such as Cytec FM300K® is then applied to the outer surface of the end plate (10), and said surface is then offered up to the annular flange (34) of the tube (32) such that the end plate (10) is spigotted within the mandrel (30). The assembly is then fitted with a suitably shaped mould and cured within an autoclave as described in WO-A-98/20263 to cure the primer, adhesive and tube (32). The bonded assembly is then removed from the autoclave and the edges finished.

Optionally, the joint between the end plate (10) and the tube (32) may be reinforced by rivets or other suitable fixings. For instance, in the embodiment shown in figures 1 and 2 the bonded flange portion (12) of the end plate and flange (34) of the tube (32) are drilled at a plurality of circumferentially spaced locations, in this case four, to form holes (22). In the embodiment shown, each of the holes (22) is formed in a respective mesa (24) which protrudes from the face of the end plate (10) that is opposite to the face bonded to the tube (32). Each of the holes (22) accommodates a tubular bush (not shown) which constitutes a rivet for holding the composite and steel components together should the adhesive bond fail.

## Claims

1. A method of bonding a first high chrome steel adherend to a second fibre composite adherend, which method comprises the steps of applying an epoxy primer to said first adherend, causing or allowing said primer to dry and thereafter adhering the first and second two adherends together using an epoxy adhesive.

2. A method as claimed in claim 1, wherein said high chrome steel comprises an aerospace grade steel.

3. A method as claimed in claim 1 or claim 2, wherein said high chrome steel comprises 12 to 20% by weight of chromium.

4. A method as claimed in claim 1, claim 2 or claim 3 wherein said steel comprises 0 to 8% by weight nickel.

5. A method as claimed in any preceding claim, wherein said first high chrome steel adherend comprises a 17/4 grade steel.

6. A method as claimed in any preceding claim wherein second fibre composite adherend comprises an aerospace-grade fibre-reinforced composite material comprising an epoxy resin.

7. A method as claimed in any preceding claim wherein said composite comprises a carbon fibre-reinforced composite material.

8. A method as claimed in any preceding claim wherein said second fibre composite adherend comprises the material 6378cHTA(12K-5-35) which is commercially available from Hexcel Corporation.

9. A method as claimed in any preceding claim wherein said first adherend is pre-treated by abrading or etching before the primer is applied.

10. A method as claimed in claim 9, wherein said first high chrome steel adherend is degreased to remove contaminants before abrading or etching.

11. A method as claimed in any preceding claim wherein said second adherend is degreased before application of said adhesive.

12. A method as claimed in an preceding claim wherein said second adherend is pre-treated by abrading to remove contaminants and/or loose or weakly bound material.

13. A method as claimed in any preceding claim wherein said epoxy primer has a rheology and chemical composition that is selected to match the morphology and surface chemistry of the first adherend.

14. A method as claimed in any preceding claim wherein said primer is water based, having a solids content of 5-15% weight.

15. A method as claimed in any preceding claim wherein said primer comprises a hardening agent.

16. A method as claimed in any preceding claim wherein said primer comprises an anti-corrosion agent.

17. A method as claimed in claim 16 wherein said anti-corrosion agent comprises a zinc salt and/or a chromate salt.

18. A method as claimed in any preceding claim wherein said primer comprises an aqueous epoxy resin dispersion which contains as a distinct phase a solid epoxy curing agent.

19. A method as claimed in claim 18, wherein said aqueous epoxy resin dispersion comprises one or more solid epoxy resins.

20. A method as claimed in claim 19, wherein one or more of said solid epoxy resins comprises a glycidyl ether of a phenol or a glycidyl derivative of an aromatic amine or aminophenol.

21. A method as claimed in any of claims 18-20, wherein said curing agent is substantially water insoluble and solid at room temperature.

22. A method as claimed in any of claims 18-21 wherein said curing agent comprises an aromatic amine or diamine curing agent.

23. A method as claimed in any of claims 18-22 wherein said primer further comprises a chromate or non-chromate corrosion inhibitor.

24. A method as claimed in any preceding claim wherein said primer is BR®6747-1-A which is commercially available from Cytec Industries Inc.

25. A method as claimed in any of claims 1 to 23 wherein said primer consists of a chromate-free equivalent to BR®6747-1-A.

26. A method as claimed in any preceding claim wherein said primer is pre-cured.

27. A method as claimed in any preceding claim wherein said epoxy adhesive comprises a film adhesive or paste adhesive.

28. A method as claimed in any preceding claim wherein said adhesive comprises a carrier that is formed from a polymeric plastics material.

29. A method as claimed in any preceding claim wherein said adhesive is a modified epoxy adhesive.

30. A method as claimed in any preceding claim wherein said adhesive is FM300K.05 which is available from Cytec Engineering Materials Inc.

31. A method as claimed in any preceding claim wherein the second adherend is used uncured and, after application of said primer to the first adherend and application of the adhesive, the composite material is co-cured with the primer and adhesive.

32. A bonded joint comprising a first-chrome steel adherend and a second fibre composite adherend, which first and second adherend bonded together using a method of bonding as claimed in any preceding claim.

33. A bonded assembly comprising a first high chrome component and a second fibre composite component, which first and second components are bonded together using a method of bonding as claimed in any of claims 1 to 31.

34. A bonded assembly as claimed in claim 33, which assembly comprises a rotary drive shaft comprising a fibre composite tube and high chrome steel flange, which tube and flange are bonded together using said bonding method.

35. An assembly as claimed in claim 34, wherein said tube is formed with at least one flared end, and the or each tube is deformed to form an integrant flange portion having an annular bonding face.

36. An assembly as claimed in claim 35, wherein the joint between the tube and the flange is reinforced by rivets, bolts or any other suitable mechanical fixings.

## Patentansprüche

1. Verfahren zum Verbinden eines hochchromhaltigen Stahls als erster Verbindungsfläche mit einem Faserverbundwerkstoff als zweiter Verbindungsfläche, wobei dieses Verfahren die Verfahrensschritte einschließt: das Zuordnen eines Epoxidprimers zur ersten Verbindungsfläche, das Veranlassen oder das Zulassen des Trocknens des Primers und das anchließende Verbinden der ersten und der zweiten der beiden Verbindungsflächen unter Verwendung eines Epoxidharzbindemittels.

2. Verfahren wie in Anspruch 1 beansprucht wobei der hochchromhaltige Stahl einen Stahl von Luft- und Raumfahrtqualität einschließt.

3. Verfahren wie in Anspruch 1 oder Anspruch 2 beansprucht, wobei der hochchromhaltige Stahl 12 bis 20 Gew.% Chrom enthält.

4. Verfahren wie in Anspruch 1, 2 oder 3 beansprucht, wobei der genannte Stahl 0 bis 8 Gew.% Nickel enthält.

5. Verfahren wie in einem beliebigen der vorherigen Ansprüche beansprucht, wobei die erste Verbindungsfläche mit hochchromhaltigem Stahl einen Stahl der Güteklasse 17/4 enthält.,

6. Verfahren wie in einem beliebigen der vorherigen Ansprüche beansprucht, wobei die zweite Verbindungsfläche mit Faserverbundwerkstoff einen ein Epoxidharz enthaltenden faserverstärkten Verbundwerkstoff der Güteklasse Luft- und Raumfahrt enthält.

7. Verfahren wie in einem beliebigen der vorherigen Ansprüche beansprucht, wobei der Faserverbundwerkstoff einen durch Kohlestofffasern verstärkten Verbundwerkstoff enthält.

8. Verfahren wie in einem beliebigen der vorherigen Ansprüche beansprucht, wobei die zweite Verbindungsfläche mit Faserverbundwerkstoff den Werkstoff 6378cHTA (12K-5-35) enthält, der als Produkt der Hexcel Corporation kommerziell verfügbar ist.

9. Verfahren wie in einem beliebigen der vorherigen Ansprüche beansprucht, wobei die genannte erste Verbindungsfläche durch Schleifen oder Ätzen vorbehandelt ist, ehe der Primer zugeordnet wird.

10. Verfahren wie in Anspruch 9 beansprucht, wobei die erste Verbindungsfläche mit hochchromatischem Stahl vor dem Schleifen oder Ätzen reduziert worden ist, um Verunreinigungen zu entfernen.

11. Verfahren wie in einem beliebigen der vorherigen Ansprüche beansprucht, wobei die genannte zweite Verbindungsfläche vor der Zuordnung des genannten Bindemittels reduziert worden ist.

12. Verfahren wie in einem vorherigen Anspruch beansprucht, wobei die genannte zweite Verbindungsfläche durch Schleifen oder Ätzen vorbehandelt worden ist, um Verunreinigungen und/oder loses oder nur schwach verbundenes Material zu entfernen.

13. Verfahren wie in einem beliebigen der vorherigen Ansprüche beansprucht, wobei der Epoxidharzprimer eine rheologische oder chemische Stoffzusammensetzung einschließt, die ausgewählt wurde, um Morphologie und Oberflächenchemie der ersten Verbindungsfläche passend zu machen..

14. Verfahren wie in einem beliebigen der vorherigen Ansprüche beansprucht, wobei der genannte Primer ein Stoff auf Wasserbasis ist, dessen Feststoffgehalt 5 bis 15 Gew.% beträgt.

15. Verfahren wie in einem beliebigen der vorherigen Ansprüche beansprucht, wobei der genannte Primer einen härtenden Wirkstoff enthält.

16. Verfahren wie in einem beliebigen der vorherigen Ansprüche beansprucht, wobei der Primer einen Antikorrosionswirkstoff enthält.

17. Verfahren wie in Anspruch 16 beansprucht, wobei der Antikorrosionswirkstoff ein Zinksalz und/oder ein chromierendes Salz enthält.

18. Verahren wie in einem beliebigen der vorherigen Ansprüche beansprucht, wobei der genannte Primer eine wässrige Epoxidharzdispersion enthält, die als charakterisierende Phase ein festes Epoxidhärtemittel enthält.

19. Verfahren wie in Anspruch 18 beansprucht, wobei die genannte wässrige Epoxidharzdispersion ein festes Epoxidharz oder mehrere feste Epoxidharze enthält.

20. Verfahren wie in Anspruch 19 beansprucht, wobei das feste Epoxidharz oder die festen Epoxidharze ein Glycidylether eines Phenoles oder ein Glycidylderivat eines aromatischen Amin oder Aminophenol enthält bzw. enthalten.

21. Verfahren wie in einem beliebigen der Ansprüche 18 bis 20 beansprucht, wobei das genannte Härtemittel im wesentlichen wasserunlöslich und bei Raumtemperatur fest ist.

22. Verfahren wie in einem beliebigen der Ansprüche 18 bis 21 beansprucht, wobei das Härtemittel ein aromatisches Aminoder Diamin-Härtemittel enthält.

23. Verfahren wie in einem beliebigen der Ansprüche 18 bis 22 beansprucht, wobei der Primer ferner einen chromaten oder nicht chromaten Korrosionshemmer enthält.

24. Verfahren wie in einem beliebigen der vorhergehenden Ansprüche beansprucht, wobei der genannte Primer BR® 6747-1-A ist, wie von Cytec Industries Inc. kommerziell verügbar gemacht.

25. Verfahren wie in einem beliebigen der Ansprüche 1 bis 23 beansprucht, wobei der genannte Primer aus einem chromatfreien Äquivalent zu BR® 6747-1-A besteht.

26. Verfahren wie in einem beliebigen der vorstehenden Ansprüche beansprucht, wobei der Primer vorgehärtet ist.

27. Verfahren wie in einem beliebigen der vorstehenden Ansprüche beansprucht, wobei das Epoxidharzbindemittel ein Film- oder Pastenverbindungsmittel enthält.

28. Verfahren wie in einem beliebigen der vorstehenden Ansprüche beansprucht, wobei das Bindemittel einen aus polymerem Plastikmaterial gebildeten Träger enthält.

29. Verfahren wie in einem beliebigen der vorstehenden Ansprüche beansprucht, wobei das Bindemittel ein modifiziertes Epoxidharzbindemittel ist.

30. Verfahren wie in einem beliebigen der vorstehenden Ansprüche beansprucht, wobei das Bindemittel FM300K.05 ist, wie durch Cytec Engineering Materials Inc. im Handel verfügbar.

31. Verfahren wie in einem beliebigen der vorstehenden Ansprüche beansprucht, wobei die zweite Verbindungsfläche ungehärtet zur Anwendung kommt und nach Zuordnung des genannten Primers zur ersten Verbindungsfläche und Anwendung des Bindemittels, das Kompositmaterial mit Primer und Bindemittel gemeinsam ausgehärtet wird.

32. Verbindung einer ersten, Chromstahlfläche und einer zweiten Faserverbundfläche, wobei erste und zweite Fläche unter Verwendung eines Verbindungsverfahrens wie in einem beliebigen der vorstehenden Ansprüche beansprucht miteinander verbunden sind.

33. Verbindungsaufbau mit einem ersten, hochchromhaltigen Bestandteil und einem zweiten, Faserverbundbestandteil, wobei erster und zweiter Bestandteil unter Verwendung eines Verbindungsverfahrens wie in einem beliebigen der Ansprüche 1 bis 31 beansprucht miteinander verbunden sind.

34. Verbindungsaufbau wie in Anspruch 33 beansprucht, wobei der Aufbau eine drehende Antriebswelle mit einem Faserverbundrohr und einem hochchromhaltigen Flansch aufweist, wobei Rohr und Flansch unter Verwendung des genannten Verbindungsverfahrens miteinander verbunden sind.

35. Aufbau wie in Anspruch 34 beansprucht, wobei das genannte Rohr mit zumindest einem flachen Ende ausgebildet ist und das oder jedes Rohr verformt ist, um einstückig einen Flanschteil zu bilden, der eine ringförmige Verbindungsfläche aufweist.

36. Aufbau wie in Anspruch 35 beansprucht, wobei die Verbindungsstelle zwischen dem Rohr und dem Flansch durch Rippen, Bolzen oder jegliche andere geeignete mechanische Halterungen verstärkt ist.

## Revendications

1. Procédé de collage d'une première surface à coller à base d'acier à forte teneur en chrome à une seconde surface à coller à base d'un composite de fibres, le procédé comprenant les étapes consistant à appliquer une couche d'accrochage époxy à ladite première surface à coller, à forcer ou laisser ladite couche d'accrochage sécher et à coller ensuite les premières et seconde surfaces à coller ensemble à l'aide d'un adhésif époxy.

2. Procédé selon la revendication 1, dans lequel ledit acier à forte teneur en chrome comprend un acier de qualité aérospatiale.

3. Procédé selon la revendication 1 ou 2, dans lequel ledit acier à forte teneur en chrome comprend 12 à 20 % en poids de chrome.

4. Procédé selon la revendication 1, la revendication 2 ou la revendication 3, dans lequel ledit acier comprend 0 à 8 % en poids de nickel.

5. Procédé selon l'une quelconque des revendications précédentes, dans lequel ladite première surface à coller à base d'acier à forte teneur en chrome comprend un acier de qualité 17/4.

6. Procédé selon l'une quelconque des revendications précédentes, dans lequel la seconde surface à coller à base d'un composite de fibres comprend un matériau composite renforcé par des fibres de qualité aérospatiale comprenant une résine époxy.

7. Procédé selon l'une quelconque des revendications précédentes, dans lequel ledit composite comprend un matériau composite renforcé par des fibres de carbone.

8. Procédé selon l'une quelconque des revendications précédentes, dans lequel ladite seconde surface à coller à base d'un composite de fibres comprend le matériau 6378cHTA(12K-5-35) qui est commercialisé par Hexcel Corporation.

9. Procédé selon l'une quelconque des revendications précédentes, dans lequel ladite première surface à coller est prétraitée par abrasion ou décapage avant que la couche d'accrochage ne soit appliquée.

10. Procédé selon la revendication 9, dans lequel ladite première surface à coller à base d'acier à forte teneur en chrome est dégraissée pour éliminer les contaminants avant l'abrasion ou le décapage.

11. Procédé selon l'une quelconque des revendications précédentes, dans lequel ladite seconde surface à coller est dégraissée avant l'application dudit adhésif.

12. Procédé selon l'une quelconque des revendications précédentes, dans lequel ladite seconde surface à coller est prétraitée par abrasion pour éliminer les contaminants et/ou le matériau non lié ou faiblement lié.

13. Procédé selon l'une quelconque des revendications précédentes, dans lequel ladite couche d'accrochage époxy a une rhéologie et une composition chimique qui est choisie pour correspondre à la morphologie et à la chimie superficielle de la première surface à coller.

14. Procédé selon l'une quelconque des revendications précédentes, dans lequel ladite couche d'accrochage est à base d'eau, avec une teneur en matières solides de 5 à 15 % en poids.

15. Procédé selon l'une quelconque des revendications précédentes, dans lequel ladite couche d'accrochage comprend un agent durcissant.

16. Procédé selon l'une quelconque des revendications précédentes, dans lequel ladite couche d'accrochage comprend un agent anti-corrosion.

17. Procédé selon la revendication 16, dans lequel ledit agent anti-corrosion comprend un sel de zinc et/ou un sel de chromate.

18. Procédé selon l'une quelconque des revendications précédentes, dans lequel ladite couche d'accrochage comprend une dispersion de résine époxy aqueuse qui contient sous forme de phase distincte un agent durcissant époxy solide.

19. Procédé selon la revendication 18, dans lequel ladite dispersion de résine époxy aqueuse comprend une ou plusieurs résines époxy solides.

20. Procédé selon la revendication 19, dans lequel une ou plusieurs desdites résines époxy solides comprend un éther glycidylique d'un phénol ou un dérivé glycidyle d'une amine aromatique ou d'un aminophénol.

21. Procédé selon l'une quelconque des revendications 18 à 20, dans lequel ledit agent durcissable est essentiellement insoluble dans l'eau et solide à la température ambiante.

22. Procédé selon l'une quelconque des revendications 18 à 21, dans lequel ledit agent durcissant comprend un agent durcissant de type amine ou diamine aromatique.

23. Procédé selon l'une quelconque des revendications 18 à 22, dans lequel ladite couche d'accrochage comprend, en outre, un inhibiteur de corrosion de type chromate ou non-chromate.

24. Procédé selon l'une quelconque des revendications précédentes, dans lequel ladite couche d'accrochage est BR®6747-1-A qui est commercialisé par Cytec Industries Inc.

25. Procédé selon l'une quelconque des revendications 1 à 23, dans lequel ladite couche d'accrochage est un équivalent sans chromate de BR®6747-1-A.

26. Procédé selon l'une quelconque des revendications précédentes, dans lequel ladite couche d'accrochage est pré-durcie.

27. Procédé selon l'une quelconque des revendications précédentes, dans lequel ledit adhésif époxy comprend un adhésif sous forme de film ou un adhésif sous forme de pâte.

28. Procédé selon l'une quelconque des revendications précédentes, dans lequel ledit adhésif comprend un véhicule qui est formé à partir d'une matière plastique polymère.

29. Procédé selon l'une quelconque des revendications précédentes, dans lequel ledit adhésif est un adhésif époxy modifié.

30. Procédé selon l'une quelconque des revendications précédentes, dans lequel ledit adhésif est FM300K.05 qui est commercialisé par Cytec Engineering Materials Inc.

31. Procédé selon l'une quelconque des revendications précédentes, dans lequel la seconde surface à coller est utilisée à l'état non durci et, après application de ladite couche d'accrochage à la première surface à coller et l'application de l'adhésif, le matériau composite est durci conjointement avec la couche d'accrochage et l'adhésif.

32. Joint collé comprenant une première surface à coller à base d'acier à forte teneur en chrome et une seconde surface à coller à base d'un composite de fibres, les première et seconde surfaces à coller étant collées ensemble par un procédé de collage selon l'une quelconque des revendications précédentes.

33. Assemblage collé comprenant un premier composant à forte teneur en chrome et un second composant à base d'un composite de fibres, les premier et second composants étant collés ensemble par un procédé de collage selon l'une quelconque des revendications 1 à 31.

34. Assemblage collé selon la revendication 33, l'assemblage comprenant un arbre d'entraînement rotatif constitué d'un tube en composite de fibres et d'une bride en acier à forte teneur en chrome, le tube et la bride étant collés ensemble par ledit procédé de collage.

35. Assemblage selon la revendication 34, dans lequel ledit tube est formé de manière à présenter au moins une extrémité évasée, et le, ou chaque, tube est déformé pour former une partie de bride intégrée ayant une face de collage annulaire.

36. Assemblage selon la revendication 35, dans lequel le joint entre le tube et la bride est renforcé par des rivets, des boulons ou tout autre dispositif de fixation mécanique convenable.
